# EUROPÄISCHE PATENTSCHRIFT

(11) **EP 1 325 412 B1**
(45) Veröffentlichungstag und Bekanntmachung des Hinweises auf die Patenterteilung: **02.12.2015**
(21) Anmeldenummer: 01978120.2
(22) Anmeldetag: 11.09.2001
(51) Int. Cl.: G06F 9/30, G06F 9/308, G06F 17/30

(54) **VERFAHREN ZUM ZUGRIFF AUF EINE SPEICHEREINHEIT, IN DER VERMERKFOLGEN GESPEICHERT SIND, ZUGEHÖRIGE SPEICHEREINHEIT UND ZUGEHÖRIGES PROGRAMM**
METHOD FOR ACCESSING A MEMORY UNIT IN WHICH SEQUENCES OF NOTES ARE STORED, CORRESPONDING MEMORY UNIT AND CORRESPONDING PROGRAM
PROCEDE POUR ACCEDER A UNE UNITE DE MEMOIRE OU SONT STOCKEES DES SERIES DE REMARQUES, UNITE DE MEMOIRE CORRESPONDANTE ET PROGRAMME CORRESPONDANT

(30) Priorität: 29.09.2000 DE 10048479
(43) Veröffentlichungstag der Anmeldung: 09.07.2003
(73) Patentinhaber: Atos IT Solutions and Services GmbH, 81739 München (DE)
(72) Erfinder: RABAIOLI, Giovanni, 85635 Höhenkirchen-Siegertsbrunn (DE)
(74) Vertreter: Patentanwaltskanzlei WILHELM & BECK
(86) Internationale Anmeldenummer: PCT/DE2001/003493
(87) Internationale Veröffentlichungsnummer: WO 2002/027467

(56) Entgegenhaltungen:
- US-A- 5 692 176
- US-A- 5 907 297
- US-A- 5 963 935
- US-A- 6 141 656

## Beschreibung

Die Erfindung betrifft ein Verfahren, bei dem in einem Schreibmodus in einer Speichereinheit zu einem Datenwert eines Datums eine Folge aus Vermerken für Datensätze gespeichert werden. In einem Lesemodus wird zumindest ein Teil der Vermerkfolge gelesen und bearbeitet, um bestimmte Datensätze zu ermitteln.

Bei einem bekannten rechnergestützten Suchverfahren wird die Vermerkfolge als Suchliste bezeichnet. Beispielsweise ist das Datum der Nachname einer Person. Der Wert des Datums ist z.B. der Nachname "Meier". Die Vermerkfolge für den Datenwert "Meier" enthält dann Vermerke auf Datensätze zu Personen, die den Nachnamen "Meier" haben. Die einzelnen Datensätze enthalten meist noch weitere Datenfelder, beispielsweise zusätzlich zum Nachnamen noch den Vornamen und eine Telefonnummer. Um die Suche nach den Daten in den anderen Datenfeldern zu erleichtern, werden sogenannte invertierte Suchlisten bzw. invertierte Vermerkfolgen eingesetzt, die für ein anderes Datum gespeichert werden, beispielsweise für bestimmte Vornamen.

Es ist bekannt, als Vermerk die Nummer eines Datensatzes abzuspeichern. Ausgehend von der Nummer lässt sich ein Datensatz mit Hilfe eines Datenbanksystems ermitteln, weil in einem Datenfeld jedes Datensatzes auch die Nummer des betreffenden Datensatzes abgespeichert ist. Bei anderen bekannten Verfahren wird aus der in der Vermerkfolge vermerkten Nummer eine Speicheradresse berechnet, an der der jeweilige Datensatz gespeichert ist. In diesem Fall muss die Nummer selbst nicht in einem Datenfeld des Datensatzes gespeichert werden. Jedoch sind auch Verfahren bekannt, bei denen die Vermerke Speicheradressen sind, an denen die Datensätze stehen. Die bekannten Verfahren haben den Nachteil, dass zum Speichern der Vermerkfolge ein großer Speicherbereich benötigt wird. Gibt es beispielsweise mehrere tausend Datensätze, so sind zum Vermerken der Nummern jeweils mehr als 16 Bit erforderlich. Gewählt werden meist 32 Bit, weil sie der Datenwortbreite üblicher Prozessoren entsprechen. Zum Abspeichern von Speicheradressen werden abhängig von der Größe des Speichers oft mehrere Datenwörter von jeweils 32 Bit benötigt.

Das Verknüpfen zweier Vermerkfolgen mit Hilfe von logischen Verknüpfungsoperationen ist aufwendig, da mit jeder Verknüpfungsoperation nur zwei Nummern bzw. zwei Adressen miteinander verknüpft werden können. Damit ist insbesondere das Verknüpfen sehr langer Listen rechenzeitaufwendig.

Im US Patent 5,907,297 wird ein Bit-Map-Index Kompressionsverfahren angegeben. Hierbei wird ein Input-Bit-Stream in einen komprimierten Output-Bit-Stream umgewandelt. Der Input-Bit-Stream ist Byte-Aligned und klassifiziert. Bytes mit dem Wert 0 werden als GAP-Bytes klassifiziert. Bytes, die nur ein einziges Bit mit dem Wert 1 aufweisen, werden als Offset-Byte klassifiziert. Alle anderen Bytes werden als MAP-Bytes klassifiziert. Gruppen von benachbarten Bytes werden in zwei Typen von Gruppen organisiert. Der erste Typ ist eine GAP-Bit-Gruppe. Eine GAP-Map-Group enthält GAP-Bytes und ein Offset-Byte. Der zweite Typ ist eine GAP-Map-Group, die GAP-Bites und Map-Bytes enthält. Die Anzahl von GAP-Bites in einer Gruppe wird GAP-Size genannt. Die Gruppen sind komprimiert in vier Typen von Atomen. Jeder Typ von Atomen hat ein Steuerungs-Byte, 0 und mehr GAP-Size-Bytes, und 0 oder mehr Map-Bytes. Das Steuerungs-Byte beschreibt das Atom. Die Map-Bytes im Atom sind Kopien der Map-Bytes in der Steuerungsgruppe.

Das US-Patent 5,963,935 beschreibt die Kombination von Bit-Maps bei Speicherbegrenzungen. Dabei werden Bit-Map-Streams zu einer resultierenden Bit-Map zusammengeführt, welche in weiteren logischen Operationen verwendet werden kann. Um das Zusammenführen bei Speicherbegrenzungen durchzuführen, wird eine Datenkompression durchgeführt. Wenn die Datenkompression durch sich selbst ineffektiv sein sollte, wird eine resultierende Bit-Map mit einem reduzierten Umfang erzeugt.

Das US-Patent 6,141,656 betrifft Suchanfragen unter Verwendung komprimierter Bit-Maps. Hierbei sollen logische Operationen an Bit-Map-Streams sequentierter Bit-Maps durchgeführt werden. Dabei sollen die logischen Operationen UND / ODER und setze "Minus" durchgeführt werden. Die logische Operationen "UND" wird an einer Vielzahl von Bit-Map-Streams durch Suche eines Satzes von überlappenden Bit-Map-Segmenten durchgeführt. Nur überlappende Bit-Map-Bereiche werden logisch miteinander verknüpft.

Aus dem US-Patent 5,692,176 ist ein Textsuche- und Bereitstellungssystem offenbart. Das Textsuche- und Bereitstellungssystem benutzt ein oder mehr Prozessoren, die mit einem Netzwerk, das mehrere User-Terminals aufweist, zusammenarbeitet, um Informationen zu empfangen und auszusenden. Ferner ist ein Speicher für eine Vielzahl von Textdokumenten und ein weiterer Prozessor vorgesehen. Der weitere Prozessor sucht das Textdokument gemäß einer Suchanfrage und stellt die gefundenen Dokumente bereit. Die gefundenen Dokumente werden gemäß einer Rangfolge bereitgestellt, wobei die Rangfolge durch eine Formel ermittelt wird, bei der gemäß dem Quadrat der Frequenz der in jedem Textdokument gefundenen Suchanfrage die Reihenfolge ermittelt wird.

Es ist Aufgabe der Erfindung, zum Zugriff auf eine Speichereinheit, in der eine Vermerkfolge gespeichert ist, ein einfaches Verfahren anzugeben, bei dem insbesondere eine schnelle Bearbeitkeit der Vermerkfolge gegeben ist. Außerdem sollen eine zugehörige Speichereinheit und ein zugehöriges Programm angegeben werden.

Die auf das Verfahren bezogene Aufgabe wird durch das im Patentanspruch 1 angegebene Verfahren und durch die im Patentanspruch 10 angegebene Speichereinheit gelöst. Weiterbildungen sind in den Unteransprüchen angegeben.

Die Erfindung geht von der Erkenntnis aus, dass es möglich ist, einen Datensatz mit nur einem einzelnen Bit zu vermerken. Dazu muss jedem Datensatz genau eine Bitposition in einer Bitfolge zugeordnet sein. Durch ein solches Vorgehen ergeben sich zunächst unmittelbar Vorteile beim Verknüpfen zweier Vermerkfolgen bzw. beim Bearbeiten einer Vermerkfolge mit einer logischen Operation. Mit einer Verknüpfungsoperation bzw. Bearbeitungsoperation lassen sich nämlich bei einer Datenwortbreite von 32 Bit bereits 32 Vermerke verknüpfen bzw. bearbeiten. Dies ist das 32-fache der bisher üblichen Verknüpfungsgeschwindigkeit mit dem gleichen Prozessor.

Außerdem geht die Erfindung von der Erkenntnis aus, dass das Zuordnen jedes Datensatzes zu einer anderen Bitposition, insbesondere beim Vorhandensein sehr vieler Datensätze, nur scheinbar mit einem wesentlich höheren Speicheraufwand verbunden ist. So könnte man annehmen, dass bei einer Million Datensätze eine Vermerkfolge aus einer Million Bit gespeichert werden müsste, wenn nur der letzte Datensatz vermerkt werden soll. Dies lässt sich jedoch durch eine Komprimierungsverfahren der Bitfolge vermeiden.

Andererseits lässt sich im Vergleich zu bekannten Vermerkfolgen Speicherplatz auch ohne Komprimierung einsparen, wenn sehr viele Datensätze in der Vermerkfolge im Vergleich zur Gesamtanzahl aller Datensätze vermerkt sind. Wird bei einem zum Vergleich dienenden herkömmlichen Verfahren zum Vermerken eines Datensatzes beispielsweise ein Datenwort mit 32 Bit benötigt, so wird für die Bitfolge gemäß erfindungsgemäßen Verfahren weniger Speicherplatz benötigt, wenn mehr als 1/32 aller vorhandenen Datensätze der Vermerkfolge vermerkt werden müssen. Sollte es Vermerkfolgen mit sehr wenigen Einträgen geben, so lässt sich in diesen Fällen auch ein herkömmliches Verfahren einsetzen. In den anderen Fällen führt der Einsatz des erfindungsgemäßen Verfahrens auch ohne Komprimierung zu einer der schnellen Verknüpfbarkeit bzw. Bearbeitbarkeit der Vermerkfolgen und zu einer erheblich Einsparung von Speicherplatz. Durch eine zusätzliche Komprimierung wird die bereits vorhandene Einsparung von Speicherplatz nochmals um Größenordnungen erhöht.

Deshalb wird beim erfindungsgemäßen Verfahren in einem Schreibmodus in einer Speichereinheit zu einem Datenwert eines Datums eine Bitfolge aus einer Vielzahl aufeinanderfolgenden Bits gespeichert. Die Bits haben jeweils einen von zwei Bitwerten, z.B. den Wert logisch 0 oder logisch 1. Einem Teil der Bitpositionen oder allen Bitpositionen ist jeweils ein Datensatz zugeordnet, der ein Datenfeld zur Speicherung des Datums enthält. Durch den einen Bitwert in der Bitfolge, z.B. den Bitwert logisch 1, wird vermerkt, dass der der Bitposition mit diesem Bitwert zugeordnete Datensatz in dem Datenfeld zur Speicherung des Datums den Datenwert enthält. Durch den anderen Bitwert, z.B. durch den Bitwert logisch 0, wird in der Bitfolge vermerkt, dass der der Bitposition mit diesem Bitwert zugeordnete Datensatz im Datenfeld zur Speicherung des Datums den Datenwert nicht enthält.

Es kann vorkommen, dass bestimmte Datensätze der Bitfolge im Laufe der Zeit als ungültig erklärt werden. In diesem Fall ist nur einem Teil oder einem Großteil der Bitpositionen jeweils ein Datensatz zugeordnet. Bitpositionen denen keine Datensätze zugeordnet sind werden beispielsweise beim Zugriff auf die Datensätze aufgrund des Fehlens von zugehörigen Daten erfasst.

Das erfindungsgemäße Verfahren wird bereits beim Schreiben der Bitfolge ausgeführt, weil damit die Voraussetzungen für einen späteren Lesemodus geschaffen werden. Jedoch wird vom erfindungsgemäßen Verfahren auch Gebrauch gemacht, wenn in einem Lesemodus zumindest ein Teil der Bitfolge gelesen wird. Auch hier kommen die oben genannten technischen Wirkungen zum Tragen, insbesondere lässt sich die Bitfolge sehr schnell verknüpfen und zur Speicherung der Bitfolge wird in vielen Fällen wesentlich weniger Speicherplatz benötigt als bei Verwenden bekannter Vermerkfolgen.

Bei einer Weiterbildung enthält die Bitfolge mehr Bitpositionen, als ein Datenwort eines auf die Speichereinheit zugreifenden Prozessors enthält. Die Bitfolge erstreckt sich somit über mehrere Datenwörter. Die Reihenfolge der Bitfolge lässt sich insbesondere bei linear adressierbaren Speichereinheiten leicht gewährleisten, wenn beispielsweise aufeinanderfolgenden Speicheradressen auch Datenwörter mit aufeinanderfolgenden Abschnitten der Bitfolge zugeordnet werden. Eingesetzt werden Bitfolgen mit mehreren tausend Bitstellen, denen mehrere tausend Datensätze zugeordnet sind. Jedoch lässt sich das erfindungsgemäße Verfahren auch bei einer sehr großen Anzahl von Datensätzen einsetzen, die auch wesentlich über einer Million Datensätzen liegen kann.

Bei einer nächsten Weiterbildung verknüpft ein Prozessor zwei Bitfolgen gemäß einer logischen Verknüpfungsoperation. Mit Hilfe der ODER-Funktion lassen sich leicht doppelte Einträge behandeln, weil in der Ergebnisbitfolge nur noch ein Vermerk für solche Einträge enthalten ist. Beim Verknüpfen verknüpft der Prozessor Bitpositionen, die den gleichen Datensätzen zugeordnet sind. Bei einer Weiterbildung werden so viele Bitpositionen gleichzeitig bearbeitet, wie in einem Datenwort des Prozessors vorhanden sind, d.h. beispielsweise mehrere Bytes von jeweils acht Bit.

Das Verknüpfungsverfahren gemäß der letztgenannten Weiterbildung eignet sich zur zeitlich parallelen Ausführung. Deshalb werden bei einer Ausgestaltung zwei Bitfolgen zeitlich parallel durch mindestens zwei Prozessoren gemäß einer logischen Verknüpfungsoperation verknüpft. Die Bitfolgen werden vor oder bei der Bearbeitung auf die Prozessoren verteilt. Die Ergebnisbitfolgen werden wieder zusammengefasst. Jeder Prozessor erhält Abschnitte beider Bitfolgen, die den gleichen Datensätzen zugeordnet sind. Es lässt sich jedoch auch eine Bitfolge mit mindestens zwei Prozessoren gemäß einer logischen Operation bearbeiten, z.B. gemäß der NICHT-Operation. Die Bitfolge wird vor der Bearbeitung in zwei oder mehrere Bitfolgen aufgeteilt. Anschließend bearbeiten die Prozessoren gleichzeitig jeweils die ihnen zugeteilten Abschnitte der Bitfolge.

Bei einer erfindungsgemäßen Bildung wird die Bitfolge mit einem Komprimierungsverfahren komprimiert. Bei einer Ausgestaltung werden aufeinanderfolgende Datenwörter, in denen nur ein Bitwert vorkommt, beispielsweise der Bitwert 0, durch zwei Zahlwerte ersetzt. Der erste Zahlwert gibt die Anzahl der ersetzten Datenwörter an. Der zweite Zahlwert gibt die Anzahl von nachfolgenden und komprimierten Datenwörtern an. Durch ein solches einfaches Komprimierungsverfahren lassen sich Komprimierungsfaktoren von 0,1 und kleiner erhalten. Es werden jedoch auch andere Komprimierungsverfahren eingesetzt, z.B. eine Lauflängencodierung, wie sie aus der Bildbearbeitung bekannt ist.

Bei einer erfindungsgemäßen Bildung wird durch die Bitposition in der Bitfolge die Nummer des zugeordneten Datensatzes bezeichnet. Der ersten Bitposition ist also der Datensatz mit der Nummer 1 zugeordnet, der rechts danebenliegenden zweiten Bitposition der Datensatz mit der Nummer 2 usw. Die Nummer lässt sich im Datensatz vermerken, um das Auffinden des Datensatzes insbesondere bei unsortiert gespeicherten Datensätzen zu ermöglichen. Alternativ lässt sich aus der Nummer jedoch auch die Speicheradresse des zugeordneten Datensatzes nach einem für die Datensätze gleichem Verfahren berechnen. In diesem Fall muss der Datensatz die Nummer nicht mehr enthalten.

Bei einer Weiterbildung wird die Bitfolge in mehreren Speicherbereichen gleicher Größe gespeichert. Solche Speicherbereiche sind beispielsweise durch ein Datenbanksystem zwingend vorgegeben. So beträgt die Größe der Speicherbereiche 32 KByte beim Einsatz des Datenhaltungssystems ISAM (Index Sequential Access Method), das beispielsweise Bestandteil der POSIX-Schnittstelle (Portable Operating System Interface for UniX) des Betriebssystems UNIX (Uniplexed Information and Computing System) ist. Eine Verweisfolge mit Verweisen auf die Speicherbereiche legt die Reihenfolge fest, in denen die Bitfolge in den Speicherbereichen gespeichert ist. Der Einsatz mehrerer Speicherbereiche vermeidet jedoch insbesondere beim Verwenden eines Komprimierungsverfahrens auch aufwendige Umspeichervorgänge, wenn sich die Länge der Bitfolge durch das Einfügen und Ändern von Bitwerten verändert. Daten müssen nicht ständig über Grenzen von Speicherbereichen hinweg verschoben werden.

Bei einer Ausgestaltung wird die Belegung der Speicherbereiche überwacht. Bei Maßnahmen zum Einbeziehen eines neuen Speicherbereiches oder zum Freigeben eines Speicherbereiches wird auch die Belegung anderer Speicherbereiche geändert. Durch das Überwachen lassen sich benachbarte Speicherbereiche mit geringer Belegung frühzeitig zusammenfassen, d.h. nicht erst dann, wenn das letzte belegte Byte oder Datenwort eines Speicherbereiches nicht mehr benötigt wird. Die vollständige Belegung eines Speicherbereiches wird ebenfalls erkannt. In diesem Fall muss einer neuer Speicherbereich zur Speicherung der Bitfolge herangezogen werden.

Bei einer Ausgestaltung wird beim Einbeziehen eines neuen Speicherbereiches zum Speichern eines Teils der Bitfolge ein Teil der Bitfolge aus einem anderen Speicherbereich in den neuen speicherbereich übernommen. Die Größe des Teils lässt sich so bemessen, dass für seine Speicherung mehr als ein Drittel des Speicherbereiches benötigt werden. Auf den neuen Speicherbereich wird in der Verweisfolge ein neuer Verweis eingefügt oder an die Verweisfolge angehängt. Durch diese Maßnahme wird erreicht, dass der vorhergehende Speicherbereich nicht so schnell wieder vollständig belegt ist und das Einfügen eines weiteren neuen Speicherbereiches hinausgeschoben wird.

Bei einer nächsten Ausgestaltung wird geprüft, ob ein Speicherbereich durch den in ihm gespeicherten Teil der Bitfolge weniger als ein Drittel belegt ist. Es wird außerdem geprüft, ob der in der Verweisfolge vor und/oder nach diesem Speicherbereich verzeichnete Speicherbereich ausreichend Platz zur Übernahme des Teils der Bitfolge bietet. Ausreichend Platz ist beispielsweise vorhanden, wenn nach der Übernahme der Bitfolge noch mindestens ein Drittel des vor bzw. nach dem zu leerenden Speicherbereich verzeichneten Speicherbereiches frei ist. Bei ausreichendem Platz wird der Teil der Bitfolge übernommen. Die Verweise in der Verweisfolge werden aktualisiert, wobei der Verweis auf den geleerten Speicherbereich entfernt wird. Dieser Speicherbereich lässt sich später wieder zum Speichern anderer Teile der Bitfolge einsetzen.

Die Erfindung betrifft außerdem eine Speichereinheit, in der mindestens eine Bitfolge und die zugehörigen Datensätze gespeichert sind. Weiterhin ist eine Speichereinheit betroffen, die Speicherzellen mit Daten enthält, die zur Durchführung des erfindungsgemäßen Verfahrens und seiner Weiterbildungen benötigt werden. Damit gelten die oben angegebenen technischen Wirkungen auch für die erfindungsgemäße Speichereinheit und deren Weiterbildungen.

Weiterhin wird durch die Erfindung ein Programm geschützt, bei dessen Ausführung durch einen Prozessor das erfindungsgemäße Verfahren oder eine seiner Weiterbildungen ausgeführt wird. Die oben genannten technischen Wirkungen gelten auch für das Programm.

Im Folgenden werden Ausführungsbeispiele der Erfindung an Hand der beiliegenden Zeichnungen erläutert. Darin zeigen:
- Figur 1: eine Datenverarbeitungsanlage mit einer Speichereinheit zum Speichern von Bitfolgen,
- Figur 2: komprimierte Bitfolgen für Verknüpfungsoperationen,
- Figur 3: Speicherbereiche zum Speichern einer Bitfolge,
- Figur 4: das Einbeziehen eines neuen Speicherbereiches zum Speichern eines Teils der Bitfolge, und
- Figur 5: das Freigeben eines zum Speichern eines Teils der Bitfolge eingesetzten Speicherbereiches.

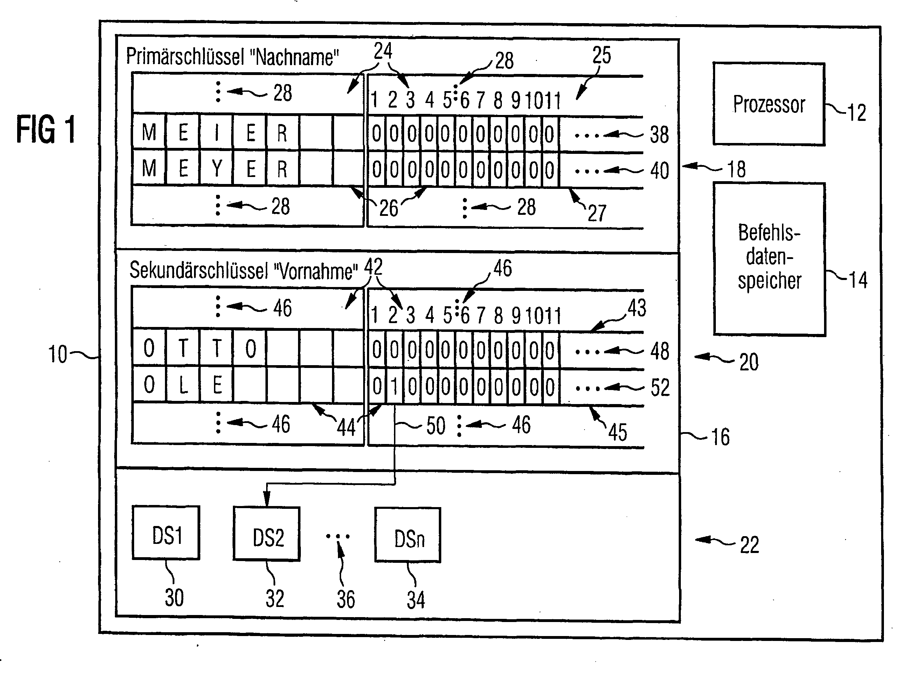

Figur 1 zeigt eine Datenverarbeitungsanlage 10, die einen Prozessor 12, einen Befehlsdatenspeicher 14 und eine Speichereinheit 16 enthält. Der Prozessor 12 ist beispielsweise ein Prozessor der 80x86 Serie der Firma Intel. Die Verarbeitungsbreite des Prozessors 12 bestimmt die Anzahl der Bitpositionen in einem Datenwort und in einem Halbwort. Beispielsweise enthält ein Datenwort zweiunddreißig Bit und ein Halbwort sechzehn Bit. Der Prozessor 12 führt Befehle aus, die im Befehlsdatenspeicher 14 gespeichert sind, um die im Folgenden erläuterten Verfahren auszuführen. Die Speichereinheit 16 ist ein Massendatenspeicher, z.B. eine Magnetplatte mit mehreren Gigabyte Speicherplatz. Als Speichereinheit 16 lässt sich beispielsweise auch ein RAM (Random Access Memory) oder ein ROM (Read Only Memory) einsetzen.

Die Speichereinheit 16 enthält drei Speicherbereiche 18 bis 22, die in dieser Reihenfolge zur Speicherung von Suchlisten, zur Speicherung von invertierten Suchlisten und zur Speicherung von Datensätzen dienen. In Figur 1 sind zwei Suchlisten 24 und 26 im Speicherbereich 18 dargestellt. Weitere Suchlisten 28 sind durch Punkte angedeutet. Die im Speicherbereich 18 gespeicherten Suchlisten 24 bis 28 gehören zu einem Primärschlüssel mit dem Attribut "Nachname". Die Suchliste 24 wurde für den Primärschlüsselwert "MEIER" angelegt. Die Suchliste 24 enthält eine Bitfolge 25, in der jede Bitposition einem Datensatz zugeordnet ist. Die Bitposition 1 der Bitfolge 25 ist einem ersten Datensatz 30 zugeordnet. Die Bitposition 2 der Bitfolge 25 ist einem zweiten Datensatz 32 zugeordnet, usw. Die letzte Bitposition n der Bitfolge 25 ist einem Datensatz 34 zugeordnet. Zwischen den Datensätzen 32 und 34 liegende Datensätze 36 sind durch Punkte angedeutet. Die in Figur 1 dargestellten Bitpositionen 1 bis 11 Bitfolge 25 haben den Wert 0, weil die ersten elf Datensätze nicht zu Personen gehören, die den Nachnamen "Meier" haben. Weitere Bitpositionen 38 der Bitfolge 25 sind durch Punkte angedeutet. Unter den nicht dargestellten Bitpositionen 38 gibt es auch Bitpositionen mit dem Wert 1. Diese Bitpositionen sind Datensätzen zugeordnet, die zu Personen gehören, deren Nachname "Meier" ist.

Die der Suchliste 24 alphabetisch nachgeordnete Suchliste 26 wurde für den Namen "MEYER" angelegt. Die Suchliste 26 enthält ebenfalls eine Bitfolge 27 mit Bitpositionen, denen jeweils ein Datensatz auf die gleiche Weise wie den Bitpositionen Bitfolge 25 zugeordnet ist. In Figur 1 sind Bitpositionen 1 bis 11 Bitfolge 27 dargestellt, welche alle Werte logisch 0 haben. Die Bitpositionen mit dem Wert 0 verweisen auf Datensätze 30 bis 34, in denen ein anderer Nachname als der Nachname "Meyer" gespeichert ist. Weitere Bitpositionen 40 der Bitfolge 27 sind durch Punkte angedeutet. Unter den weiteren Bitpositionen 40 gibt es einige Bitpositionen mit dem Wert 1. Diese Bitpositionen verweisen auf Datensätze, die zu Personen gehören, die den Nachnamen "Meyer" haben. Die Bitpositionen mit dem Wert 0 verweisen dagegen auf Datensätze 30 bis 34, in denen ein anderer Nachname als der Nachname "Meyer" gespeichert ist.

Im Speicherbereich 20 sind zwei invertierte Suchlisten 42 und 44 gespeichert. Weitere invertierte Suchlisten 46 sind durch Punkte angedeutet. Die invertierte Suchliste 42 wurde für den Sekundärschlüssel "Vorname" mit dem Wert "OTTO" angelegt. Neben dem Schlüsselwert ist in der invertierten Suchliste 42 eine Bitfolge 43 gespeichert, deren Bitpositionen den Datensätzen 30 bis 34 auf die gleiche Weise wir die Bitpositionen der Bitfolge 25 zugeordnet sind. In Figur 1 sind Bitpositionen 1 bis 11 der Bitfolge 43 dargestellt, die alle den Wert 0 haben. Weitere Bitpositionen 48 der Bitfolge 43 sind durch Punkte angedeutet.

Der invertierten Suchliste 42 ist die invertierte Suchliste 44 alphabetisch nachgeordnet. Die invertierte Suchliste 44 wurde für den Vornamen "OLE" angelegt und enthält neben diesem Vornamen eine Bitfolge 45, deren Bitpositionen 1 bis 11 in Figur 1 dargestellt sind. Die Bitposition 1 der Bitfolge 45 ist dem Datensatz 30 zugeordnet. Der Wert 0 an der Bitposition 1 weist darauf hin, dass im Datensatz 30 ein anderer Vorname als der Vorname "Ole" gespeichert ist. Die Bitposition 2 der Bitfolge 45 hat den Wert 1. Dies bedeutet, dass der zweite Datensatz 32 den Vornamen "Ole" enthält, siehe Pfeil 50. Die Bitpositionen 3 bis 11 der Bitfolge 45 haben den Wert 0. Weitere Bitpositionen 52 der Bitfolge 45 werden durch Punkte angedeutet.

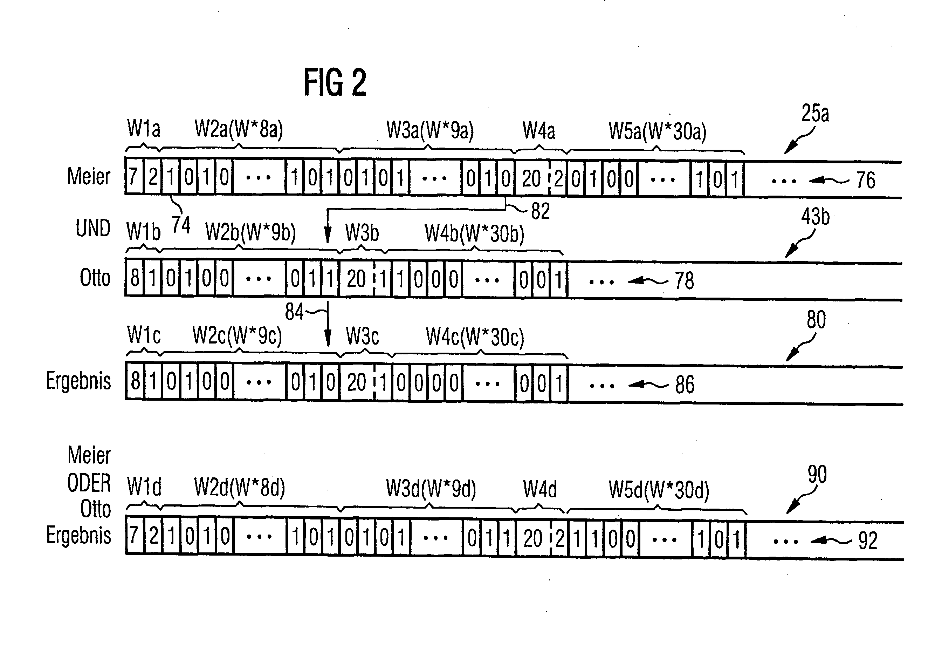

Figur 2 zeigt komprimierte Bitfolgen 25a und 43b, die aus der Bitfolge 25 der Suchliste 24 bzw. aus der Bitfolge 43 der invertierten Suchliste 42 entstanden sind. Demzufolge ist die komprimierte Bitfolge 25a dem Nachnamen "Meier" zugeordnet. In einem ersten Datenwort W1a der Bitfolge 25a sind zwei Zahlwerte enthalten. Die Zahlwerte lassen sich auch auf andere Art speichern, z.B. jeweils in einem Datenwort. Jede Bitfolge fängt mit zwei Zahlwerten an, auch wenn die Bitfolge mit 1 beginnt. In diesem Fall ist der erste Zahlwert 0.

Ein Zahlwert "7" im linken Halbwort des Datenwortes W1a gibt an, dass die unkomprimierte Bitfolge 25 in unkomprimierter Form zunächst sieben Datenwörter W*1a bis W*7a enthält, deren Bitpositionen alle den Wert 0 haben. Der "*" deutet auf die unkomprimierte Form der Bitfolge hin. Der Zahlwert "2" im rechten Halbwort des Datenwortes W1a gibt an, dass dem Datenwort W1a zwei Datenwörter W2a und W3a folgen, die unkomprimierte Teile der Bitfolge 25a enthalten. Die Datenwörter mit unkomprimierten Teilen enthalten jeweils 32 Bitstellen, von denen in Figur 2 jeweils die vier ersten Bitstellen und die drei letzten Bitstellen dargestellt sind. Dazwischenliegende Bitstellen sind durch Punkte angedeutet. Das zweite Datenwort W2a der komprimierten Bitfolge 25a bildet das achte Datenwort W*8a der unkomprimierte Bitfolge 25. Die erste Bitposition 74 des Datenwortes W2a gehört zu dem 225-ten Datensatz und hat den Wert 1, so dass der 225-te Datensatz den Nachnamen "Meier" enthält. Das Datenwort W2a beginnt mit der Bitfolge "1010" und endet mit der Bitfolge "101". Das dritte Datenwort W3a der komprimierten Bitfolge 25a entspricht dem neunten Datenwort W*9a der unkomprimierten Bitfolge 25 und enthält die Anfangsbitfolge "0101" sowie die Endbitfolge "010". Im nächsten Datenwort W4a der komprimierten Bitfolge 25a sind wieder zwei Zahlwerte vermerkt. Der Wert "20" im ersten Halbwort des Datenwortes W4a zeigt an, dass in der unkomprimierten Bitfolge 25 zwanzig Datenwörter folgen, deren Bitpositionen alle den Wert 0 haben. Der Wert "2" im rechten Halbwort des Datenwortes W4a gibt an, dass in der unkomprimierten Bitfolge 25a zwei weitere Datenwörter W5a und W6a folgen, in denen Bitfolgen der unkomprimierten Bitfolge 25 gespeichert sind. Das fünfte Datenwort W5a der komprimierten Bitfolge 25a entspricht dem dreißigsten Datenwort W*30a der unkomprimierten Bitfolge 25. Das Datenwort W5a enthält die Anfangsbitfolge "0100" und die Endbitfolge "101". Weitere Datenwörter 76 der Bitfolge 25a sind durch Punkte angedeutet.

Die komprimierte Bitfolge 43b beginnt mit einem Datenwort W1b, in dem zwei Zahlwerte gespeichert sind. Der Wert "8" im linken Halbwort des Datenwortes W1b gibt an, dass die unkomprimierte Bitfolge 43 mit acht Datenwörtern beginnt, deren Bitpositionen alle den Wert 0 haben. Der Wert "1" im rechten Halbwort des Datenwortes W1b gibt an, dass in der komprimierten Bitfolge 43b ein Datenwort W2b folgt, das ein unkomprimierte Datenwort der Bitfolge 43 enthält. Das zweite Datenwort W2b der komprimierten Bitfölge 43b entspricht dem neunten Datenwort W*9b der unkomprimierten Bitfolge 43. Das folgende Datenwort W3b der komprimierten Bitfolge 43b enthält in seinem linken Halbwort den Zahlwert "20", der anzeigt, dass in der unkomprimierten Bitfolge 43 zwanzig Datenwörter folgen, deren Bitstellen den Wert 0 haben. Im rechten Halbwort des Datenwortes W3b ist der Wert "1" enthalten, der anzeigt, dass dem Datenwort W3b in der komprimierten Bitfolge 43b ein Datenwort W4b folgt, in dem Bitpositionen der unkomprimierten Bitfolge 43 gespeichert sind. Das vierte Datenwort W4b der komprimierten Bitfolge 43b entspricht dem 30-ten Datenwort W*30b der unkomprimierten Bitfolge 43. Das Datenwort W4b enthält die Anfangsbitfolge "1000" und die Endbitfolge "001". Weitere Datenwörter 78 der Bitfolge 43b sind durch Punkte angedeutet.

Eine komprimierte Ergebnisbitfolge 80 entsteht beim Abarbeiten eines im Befehlsdatenspeicher 14 gespeicherten Verknüpfungsprogramms durch den Prozessor 12, siehe Figur 1. Dem Verknüpfungsprogramm werden die Bitfolgen 25a und 43b als Eingabe übergeben. Außerdem wird durch einen Parameter festgelegt, dass eine bitweise UND-Verknüpfung der Bitpositionen beider Bitfolgen ausgeführt werden soll. Beim Berechnen der Ergebnisbitfolge 80 wird festgestellt, dass die unkomprimierte Bitfolge 25 am Anfang acht Datenwörter enthält, deren Bitpositionen den Wert 0 haben. Unabhängig von den Werten der ersten acht Datenwörter der unkomprimierten Bitfolge 43 wird deshalb ein Datenwort W1c der komprimierten Ergebnisbitfolge 80 festgelegt. dabei wird von den ersten Zahlwerten in den Datenwörtern W1a und W1b der größere Zahlenwert und von den zweiten Zahlenwerten in den Datenwörtern W1a und W1b der kleinere Zahlenwert in das Datenwort W1c übernommen. Das Datenwort W1c enthält also in seinem linken Halbwort den Zahlwert "8" und in seinem rechten Halbwort den Zahlwert "1". Somit entspricht das Datenwort W1c dem Datenwort W1b. Die ersten acht Datenwörter der Bitfolgen 70 und 72 sind damit bereits verknüpft. In einem nächsten Verfahrensschritt wird das Datenwort W3a bitweise mit dem Datenwort W2b verknüpft. Dies erfolgt mit Hilfe eines einzigen UND-Befehls für den Prozessor 12. Der Prozessor 12 erzeugt bei diesem Befehl ein zweites Datenwort W2c der komprimierten Ergebnisbitfolge 80, das dem neunten Datenwort W*9c der unkomprimierten Ergebnisbitfolge entspricht. Das Datenwort W2c hat die Anfangsbitfolge "0100" und die Endbitfolge "010". Beispielsweise wird für die letzte Bitposition die "0" des Datenwortes W3a mit der "1" an der letzten Position des Datenwortes W2b verknüpft. Das Verknüpfungsergebnis ist "0" und wird in der letzten Bitposition des Datenwortes W2c gespeichert, siehe Pfeile 82 und 84.

Als nächstes werden die Datenwörter W4a und W3b bearbeitet. Es wird ein drittes Datenwort W3c der komprimierten Ergebnisbitfolge 80 erzeugt, dessen linkes Halbwort den Zahlwert "20" und dessen rechtes Halbwort den Zahlwert "1" enthält. Anschließend werden die Datenwörter W5a und W4b bitweise mit Hilfe des UND-Befehls des Prozessors 12 in einem Befehlszyklus verknüpft. Es entsteht das Datenwort W4c, das die Anfangsbitfolge "0000" und die Endbitfolge "001" enthält. Das Datenwort W4c der komprimierten Ergebnisbitfolge 80 entspricht dem 30-ten Datenwort W*30c der unkomprimierten Ergebnisbitfolge. Weitere Datenwörter 86 der Ergebnisbitfolge 80 sind durch Punkte angedeutet.

Im unteren Teil der Figur 2 ist eine komprimierte Ergebnisbitfolge 90 dargestellt, die das Ergebnis einer bitweisen ODER-Verknüpfung der Bitfolgen 25a und 43b ist. Die Verknüpfung wird mit der Bearbeitung der Datenwörter W1a und W1b begonnen. Aufgrund der für die ODER-Verknüpfung geltenden Gesetzmäßigkeiten wird der erste Zahlwert "7" des Datenwortes W1a, der kleiner als der erste Zahlwert des Datenwortes W1b ist, in das erste Ergebnisdatenwort W1d übernommen. Der Zahlwert "2" aus dem rechten Halbwort des Datenwortes W1a ist größer als der Zahlwert "1" im rechten Halbwort des Datenwortes W1b und wird deshalb in das rechte Halbwort des Datenwortes W1d übernommen. Anschließend werden die Bitwerte des Datenwortes W2a als Bitwerte des zweiten Datenwortes W2d der Ergebnisbitfolge 90 übernommen. Das Datenwort W2d der komprimierten Ergebnisbitfolge 90 stimmt mit dem achten Datenwort W*8b der unkomprimierten Ergebnisbitfolge überein. In einem nächsten Verfahrensschritt wird das Datenwort W3a bitweise mit dem Datenwort W2b gemäß der ODER-Funktion verknüpft. Es entsteht ein drittes Datenwort W3d der Ergebnisbitfolge 90. Das Datenwort W3d enthält die Anfangsbitfolge "0101" und die Endbitfolge "011".

Beim weiteren Ausführen der ODER-Verknüpfung wird nach einem Vergleich der Wert "20" aus dem Datenwort W4a in das erste Halbwort des folgenden Ergebnisdatenwortes W4d übernommen. Der Zahlwert "2" des zweiten Halbwortes des Datenwortes W4a wird ebenfalls nach einem Vergleich als rechtes Halbwort des Datenwortes W4b übernommen. Anschließend werden die Datenwörter W5a und W4b bitweise miteinander verknüpft. Es entsteht das Datenwort W5d der komprimierten Ergebnisbitfolge 90. Das Datenwort W5d enthält die Anfangsbitfolge "1100" und die Endbitfolge "101". Das Datenwort W5d entspricht dem 30-ten Datenwort W*30d der unkomprimierten Ergebnisbitfolge. Weitere Datenwörter 92 der Ergebnisbitfolge 90 sind durch Punkte angedeutet.

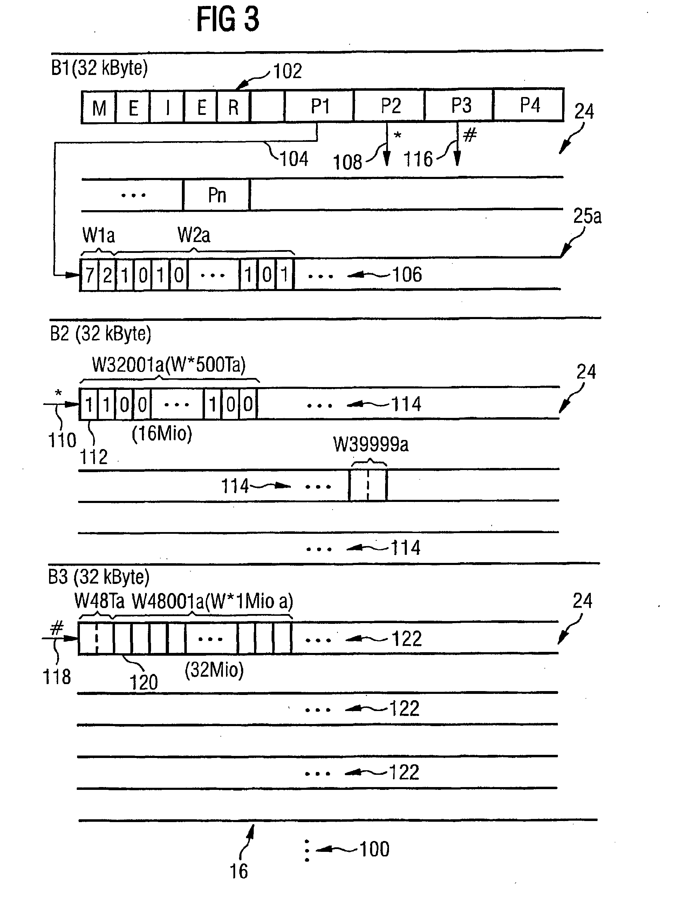

Figur 3 zeigt Speicherbereiche B1, B2 und B3 zur Speicherung der Suchliste 24. Die Speicherbereiche B1 bis B3 haben jeweils eine Länge von 32 KByte. Weitere Speicherbereiche 100 mit der gleichen Länge dienen ebenfalls zur Speicherung der Suchliste 24 und sind durch Punkte angedeutet. Der lineare Adressraum der Speichereinheit 16 ist durch untereinanderstehende Zeilen in Figur 3 dargestellt, die von links nach rechts und von oben nach unten aufsteigende Adressen haben. Am Anfang des Speicherbereichs B1 ist der Primärschlüsselwert "MEIER" in einer Bytefolge 102 aus 6 Bytes vermerkt. Beginnend mit der nächsten freien Adresse werden Verweise P1 bis Pn gespeichert, wobei n eine natürliche Zahl ist und die Anzahl der zum Speichern der Suchliste 24 benötigten Speicherbereiche angibt. Die Verweise P1 bis Pn sind Speicheradressen der Speichereinheit 16, an denen die Abschnitte der Bitfolge 25a in jedem Speicherbereich B1 bis Bn beginnen. So verweist der Verweis P1 auf eine Adresse des Speicherbereiches B1, die nach der Adresse zum Speichern des letzten Verweises Pn liegt. An der im Verweis P1 angegebenen Adresse beginnt die Bitfolge 25a, siehe Pfeil 104. In Figur 3 sind die bereits oben an Hand der Figur 2 erläuterten Datenwörter W1a und W2a der Bitfolge 25a dargestellt. Weitere Datenwörter 106 der komprimierten Bitfolge 25a sind durch Punkte angedeutet.

Der Verweis P2 enthält die erste Adresse bzw. zeigt auf die erste Adresse des Speicherbereiches B2, vgl. Pfeile 108 und 110. An der ersten Adresse des Speicherbereiches B2 ist das 32001-te Datenwort W32001a der Bitfolge 25a gespeichert. Das Datenwort W32001a entspricht dem Datenwort W*500000a der unkomprimierten Bitfolge 25. Bei einer Datenwortlänge von 32 Bit ist die erste Bitposition 112 des Datenwortes W320001a dem 16.000.000-ten Datensatz zugeordnet. Weitere Datenwörter 114 des im Speicherbereich B2 gespeicherten Teils der Bitfolge 25a sind durch Punkte angedeutet. Im Speicherbereich B2 ist noch ein Datenwort W39999a dargestellt, das zwei Zahlwerte enthält.

Der Verweis P3 zeigt auf die Startadresse des Speicherbereiches B3, siehe Pfeile 116 und 118. Am Beginn des Speicherbereiches B3 ist ein Datenwort W48000a der komprimierten Bitfolge 25a gespeichert. Im Datenwort W48000a sind zwei Zahlwerte gespeichert. In einem folgenden Datenwort W48001a sind einzelne Bitpositionen der Bitfolge 25a gespeichert. Die erste Bitposition 120 des Datenwortes W48001a ist dem 32.000.000-ten Datensatz zugeordnet. Das Datenwort W48001a entspricht dem 1000000-ten Datenwort W*1000000a der unkomprimierten Bitfolge 25. Weitere im Speicherbereich B3 gespeicherte Datenwörter 122 der komprimierten Bitfolge 25a sind durch Punkte angedeutet.

Die Reihenfolge der Speicherbereiche B2 bis Bn in der Speichereinheit 16 lässt sich frei wählen. Bei einer veränderten Reihenfolge verändern sich nur die in den Verweisen P1 bis Pn gespeicherten Startadressen der Speicherbereiche B2 bis Bn.

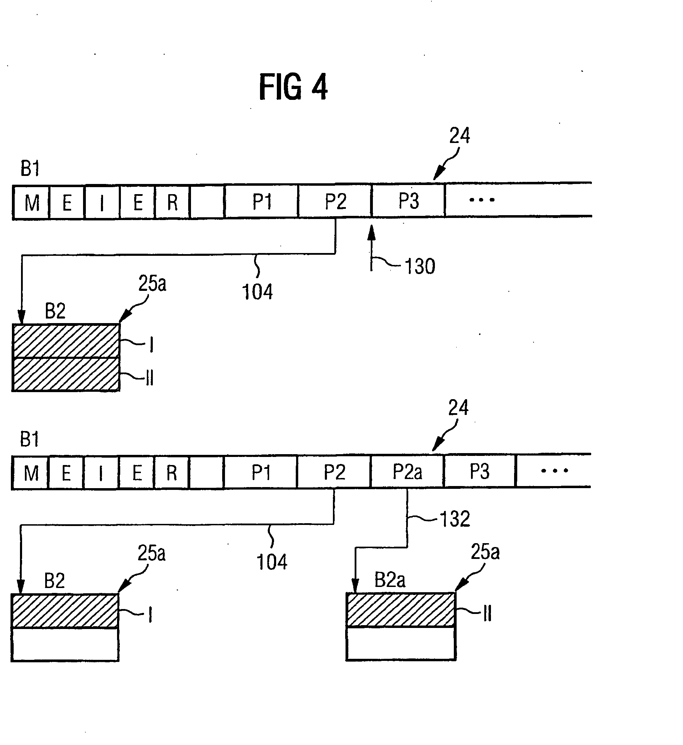

Figur 4 zeigt das Einbeziehen eines neuen Speicherbereiches B2a zum Speichern eines Teils der Bitfolge 25a der Suchliste 24. Im oberen Teil der Figur 4 ist durch schraffierte Linien innerhalb des Speicherbereiches B2 angedeutet, dass der Speicherbereich B2 durch die Bitfolge 25a vollständig belegt ist. Die erste Hälfte des im Speicherbereich B2 gespeicherten Teils der Bitfolge 25a wird als I bezeichnet. Die andere Hälfte des im Speicherbereich B2 gespeicherten Teils der Bitfolge 25a wird als II bezeichnet. Durch ein Überwachungsprogramm wird beim Hinzufügen von unkomprimierten Abschnitten der Bitfolge oder beim Anfügen von Abschnitten am Ende der Bitfolge festgestellt, dass der Speicherbereich B2 vollständig belegt ist. Deshalb muss ein neuer Speicherbereich B2a zur Speicherung der Bitfolge 25a verwendet werden. Durch das Überwachungsprogramm wird zwischen den Verweisen P2 und P3 ein neuer Verweis P2a eingefügt, siehe Pfeil 130. Im Verweis P2a wird die Startadresse des Speicherbereiches B2a vermerkt, siehe Pfeil 132.

Die erste Hälfte I verbleibt im Speicherbereich B2. Die zweite Hälfte II wird aus dem Speicherbereich B2 an den Anfang des Speicherbereiches B2a kopiert. Somit gibt es am Ende anstelle des vollständig belegten Speicherbereiches B2 die beiden zur Hälfte belegten Speicherbereiche B2 und B2a.

Bei einem anderen Ausführungsbeispiel wird das an Hand der Figur 4 erläuterte Verfahren auch zum Einbeziehen eines neuen Speicherbereiches Bn+1 am Ende der Bitfolge 25a durchgeführt.

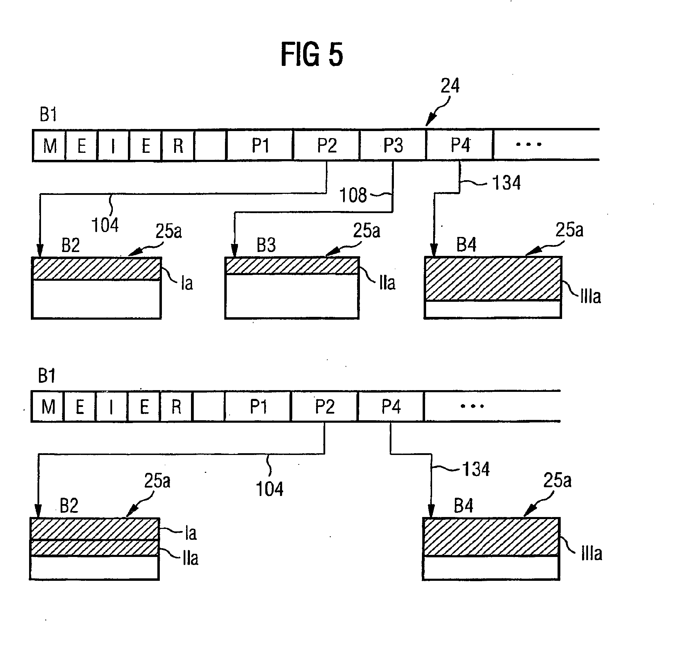

Figur 5 zeigt das Freigeben eines zum Speichern eines Teils der Bitfolge 25a eingesetzten Speicherbereiches B3. Ein erster Teil Ia der Bitfolge 25a ist im Speicherbereich B2 gespeichert und belegt etwa ein Drittel des Speicherbereiches B2. Ein nachfolgender zweiter Teil IIa der Bitfolge 25a ist im Speicherbereich B3 gespeichert und belegt dort weniger als ein Drittel des Speicherbereiches B3. Ein dritter Teil IIIa der Bitfolge 25a ist im Speicherbereich B4 gespeichert und belegt dort etwa zwei Drittel des Speicherbereiches B4. Die Verweise P2, P3 und P4 verweisen in dieser Reihenfolge auf die Speicherbereiche B2, B3 und B4, siehe Pfeile 104, 108 und 134.

Durch das beim Komprimieren der Bitfolge aufgerufene Überwachungsprogramm wird festgestellt, dass im Speicherbereich B3 weniger als ein Drittel des Speicherplatzes belegt ist. Daraufhin prüft das Überwachungsprogramm, ob in den Speicherbereichen B2 bzw. B4, d.h. in den zum Speichern benachbarter Teile der Bitfolge 25a bezüglich des im Speicherbereich B3 gespeicherten Teils der Bitfolge 25a dienenden Speicherbereichen, ausreichend Platz vorhanden ist. Ausreichend Platz bedeutet, dass die Summe des ersten Teils Ia und des zweiten Teils IIa einen Speicherbereich ergibt, der kleiner als zwei Drittel des im Speicherbereich B2 zur Verfügung stehenden Speicherbereiches ist. Andererseits lässt sich auch prüfen, ob die Summe des Speicherbedarfs zum Speichern des zweiten Teils IIa und zum Speichern des dritten Teils IIIa ebenfalls einen Speicherbedarf ergibt, der kleiner als zwei Drittel des Speicherplatzes im Speicherbereich B4 ist. Letzteres ist nicht der Fall. Jedoch wurde bei der Prüfung des Speicherbereiches B2 festgestellt, dass dort ausreichend Platz vorhanden ist.

Deshalb wird in einem anschließenden Kopiervorgang der zweite Teil IIa aus dem Speicherbereich B3 in den Speicherbereich B2 kopiert. Der Speicherbereich B3 wird anschließend freigegeben und kann für andere Zwecke genutzt werden. Außerdem wird der Verweis P3 aus der Verweisfolge entfernt.

Am Ende sind die noch verbliebenen Speicherbereiche B2 und B4 jeweils etwa zu zwei Dritteln mit Teilen Ia, IIa bzw. IIa der Bitfolge 25a belegt. Bei Veränderung der Bitfolge 25a durch neu hinzukommende Datensätze oder geänderte Datensätze lässt sich der noch nicht belegte Speicherplatz in den Speicherbereichen B2 und B4 nutzen, bevor das Überwachungsprogramm Maßnahmen zum Einbeziehen eines weiteren Speicherbereiches einleiten muss.

## Patentansprüche

1. Verfahren zum Zugriff auf eine Speichereinheit (16) mit Speicherzellen, in denen zu einem Datenwert (102) ein Datum einer Bitfolge (25, 25a) aus einer Vielzahl aufeinanderfolgenden Bits (74) gespeichert ist, die jeweils einen von zwei Bitwerten haben, und mit Speicherzellen zum Speichern einer Vielzahl von Datensätzen (30 bis 34), die jeweils einer Bitposition (74) der Bitfolge (25, 25a) zugeordnet sind und ein Datenfeld zum Speichern des Datums enthalten,
Verfahren, bei dem in einem Schreibmodus der Speichereinheit (16) zu einem Datenwert (102) eines Datums die Bitfolge (25, 25a) gespeichert wird, oder bei dem in einem Lesemodus zumindest ein Teil der Bitfolge (25, 25a) gelesen wird,
bei dem durch den einen Bitwert in der Bitfolge (25, 25a) vermerkt wird, dass der der Bitposition mit diesem Bitwert zugeordnete Datensatz (30 bis 35) in dem Datenfeld zur Speicherung des Datums den Datenwert enthält,
und bei dem durch den anderen Bitwert in der Bitfolge (25, 25a) vermerkt wird, dass der der Bitposition (74) mit diesem Bitwert zugeordnete Datensatz (30 bis 34) in dem Datenfeld zur Speicherung des Datums den Datenwert nicht enthält,
Verfahren, bei dem die Bitfolge (25, 25a) mit einem Komprimierungsverfahren komprimiert wird,
bei dem ein Ersetzen von aufeinanderfolgenden Datenwörtern, in denen nur der andere Bitwert vorkommt, durch jeweils einen ersten Zahlwert (W1a), der die Anzahl der ersetzten Datenwörter angibt, erfolgt,
wobei jeweils ein zweiter Zahlwert (W1a) die Anzahl von nachfolgenden ersten unkomprimierten Datenwörtern (W2a, W3a) angibt,
wobei in der komprimierten Bitfolge (25a) ein weiterer
erster Zahlwert (W4a), der die Anzahl der weiteren ersetzten Datenwörter, in denen nur der andere Bitwert vorkommt, und ein weiterer zweiter Zahlwert (W4a), der die Anzahl von nachfolgenden zweiten unkomprimierten Datenwörtern (W5a) angibt, den ersten unkomprimierten Datenwörtern (W2a, W3a) nachfolgen, und
wobei die komprimierte Bitfolge (25a) mit einem ersten Zahlwert (W1a) und einem zweiten Zahlwert (W1a) anfängt, und wenn die Bitfolge (25) mit einem Datenwort anfängt, deren Bitpositionen nicht alle den anderen Bitwert haben, ist der erste Zahlwert (W1a) Null.

2. Verfahren nach Anspruch 1, **dadurch gekennzeichnet, dass** die Bitfolge (25, 25a) mehr Bitpositionen enthält als in einem Datenwort eines auf die Speichereinheit (16) zugreifenden Prozessors enthalten sind,
und dass die Bitfolge (25, 25a) vorzugsweise mehrere tausend, mehrere hunderttausend oder mehrere millionen Bitstellen enthält, denen mehrere tausend, mehrere hunderttausend oder mehrere millionen Datensätze (30 bis 34) zugeordnet sind.

3. Verfahren nach Anspruch 1 oder 2, **dadurch gekennzeichnet, dass** ein Prozessor (12) zwei Bitfolgen (25, 25a, 72) gemäß einer logischen Verknüpfungsoperation verknüpft, vorzugsweise gemäß der ODER-Funktion oder der UND-Funktion,
wobei Bitpositionen (82) verknüpft werden, die dem gleichen Datensatz zugeordnet sind,
und wobei vorzugsweise so viele Bitpositionen gleichzeitig bearbeitet werden, wie in einem Datenwort des Prozessors vorhanden sind.

4. Verfahren nach einem der vorhergehenden Ansprüche, **dadurch gekennzeichnet, dass** zwei Bitfolgen zeitlich parallel durch mindestens zwei Prozessoren gemäß einer logischen Verknüpfungsoperation verknüpft werden,
oder dass eine Bitfolge durch mindestens zwei Prozessoren gemäß einer logischen Operation bearbeitet wird, vorzugsweise gemäß der NICHT-Operation.

5. Verfahren nach einem der vorhergehenden Ansprüche, **dadurch gekennzeichnet, dass** durch die Bitposition (74) in der Bitfolge (25, 25a) die Nummer des zugeordneten Datensatzes (30 bis 34) bezeichnet wird, und dass diese Nummer im Datensatz (30 bis 34) vermerkt ist oder dass sich aus dieser Nummer die Speicheradresse des zugeordneten Datensatzes (30 bis 34) vorzugsweise nach einem für die Datensätze einheitlichen Verfahren berechnen lässt.

6. Verfahren nach einem der vorhergehenden Ansprüche, **dadurch gekennzeichnet, dass** die Bitfolge (25, 25a) in mehreren Speicherbereichen (B1 bis B3) vorzugsweise gleicher Größe gespeichert wird,
dass eine Verweisfolge mit Verweisen (P1 bis Pn) auf die Speicherbereiche (B1 bis B3) die Reihenfolge festlegt, in denen die Bitfolge (25, 25a) in den Speicherbereichen (B1 bis B3) gespeichert ist.

7. Verfahren nach Anspruch 6, **dadurch gekennzeichnet, dass** die Belegung der Speicherbereiche (B1 bis B3) überwacht wird,
und dass bei Maßnahmen zum Einbeziehen eines neuen Speicherbereiches oder zum Freigeben eines Speicherbereiches auch die Belegung anderer Speicherbereiche geändert wird.

8. Verfahren nach Anspruch 7, **dadurch gekennzeichnet, dass** beim Einbeziehen eines neuen Speicherbereiches (B2a) zum Speichern eines Teils der Bitfolge (25, 25a) ein Teil (II) der Bitfolge (25, 25a) aus einem anderen Speicherbereich (B2) in den neuen Speicherbereich (B2a) übernommen wird, vorzugsweise ein Teil (II), für den mehr als ein Drittel des Speicherbereiches (B2) benötigt wird,
und dass ein Verweis (P2a) auf den neuen Speicherbereich (B2a) in die Verweisfolge (P1 bis Pn) eingefügt oder an die Verweisfolge angehängt wird.

9. Verfahren nach Anspruch 7, **dadurch gekennzeichnet, dass** geprüft wird, ob ein Speicherbereich (B3) durch den in ihm gespeicherten Teil (IIa) der Bitfolge (25, 25a) weniger als ein Drittel belegt ist,
und dass geprüft wird, ob der in der Verweisfolge vor und/oder nach diesem Speicherbereich (B3) verzeichnete Speicherbereich (B2, B4) ausreichend Platz zur Übernahme des Teils (IIa) der Bitfolge (25, 25a) bietet,
und dass bei ausreichendem Platz der Teil (IIa) der Bitfolge (25, 25a) übernommen und der Verweis (P3) auf den nun freien Speicherbereich (B3) aus der Verweisfolge entfernt wird.

10. Speichereinheit (16),
mit Speicherzellen, in denen zu einem Datenwert (102) ein Datum einer Bitfolge (25, 25a) aus einer Vielzahl aufeinanderfolgenden Bits (74) gespeichert ist, die jeweils einen von zwei Bitwerten haben,
und mit Speicherzellen zum Speichern einer Vielzahl von Datensätzen (30 bis 34), die jeweils einer Bitposition (74) der Bitfolge (25, 25a) zugeordnet sind und ein Datenfeld zum Speichern des Datums enthalten,
wobei durch den einen Bitwert in der Bitfolge (25, 25a) vermerkt wird, dass der der Bitposition mit diesem Bitwert zugeordnete Datensatz (30 bis 35) in dem Datenfeld zur Speicherung des Datums den Datenwert enthält,
und wobei durch den anderen Bitwert in der Bitfolge (25, 25a) vermerkt wird, dass der der Bitposition (74) mit diesem Bitwert zugeordnete Datensatz (30 bis 34) in dem Datenfeld zur Speicherung des Datums den Datenwert nicht enthält,
wobei die Bitfolge (25, 25a) mit einem Komprimierungsverfahren komprimiert wurde,
bei dem ein Ersetzen von aufeinanderfolgenden Datenwörtern, in denen nur der andere Bitwert vorkommt, durch jeweils einen ersten Zahlwert (W1a), der die Anzahl der ersetzten Datenwörter angibt, erfolgt,
wobei jeweils ein zweiter Zahlwert (W1a) die Anzahl von nachfolgenden ersten unkomprimierten Datenwörtern (W2a, W3a) angibt,
wobei in der komprimierten Bitfolge (25a) ein weiterer erster Zahlwert (W4a), der die Anzahl der weiteren ersetzten Datenwörter, in denen nur der andere Bitwert vorkommt, und ein weiterer zweiter Zahlwert (W4a), der die Anzahl von nachfolgenden zweiten unkomprimierten Datenwörtern (W5a) angibt, den ersten unkomprimierten Datenwörtern (W2a, W3a) nachfolgen, und
wobei die komprimierte Bitfolge (25a) mit einem ersten Zahlwert (W1a) und einem zweiten Zahlwert (W1a) anfängt, und wenn die Bitfolge (25) mit einem Datenwort anfängt, deren Bitpositionen nicht alle den anderen Bitwert haben, ist der erste Zahlwert (W1a) Null.

11. Speichereinheit nach Anspruch 10, **dadurch gekennzeichnet, dass** die Speichereinheit (16) Speicherzellen mit Daten enthält, die zur Durchführung des Verfahrens nach einem der Ansprüche 1 bis 9 benötigt werden.

12. Programm mit einer Befehlsfolge, bei deren Ausführung durch einen Prozessor (12) ein Verfahren gemäß einem der Ansprüche 1 bis 9 ausgeführt wird.

## Claims

1. Method for accessing a memory unit (16) having memory cells which store, for a data value (102), a data item from a bit string (25, 25a) comprising a multiplicity of successive bits (74) which each have one of two bit values and having memory cells for storing a multiplicity of data records (30 to 34) which are each associated with a bit position (74) in the bit string (25, 25a) and contain a data field for storing the data item,
in which method a write mode for the memory unit (16) involves the bit string (25, 25a) being stored for a data value (102) of a data item, or in which a read mode involves at least a portion of the bit string (25, 25a) being read,
in which one bit value in the bit string (25, 25a) records that the data record (30 to 34) associated with the bit position having this bit value contains the data value in the data field for storing the data item,
and in which the other bit value in the bit string (25, 25a) records that the data record (30 to 34) associated with the bit position (74) having this bit value does not contain the data value in the data field for storing the data item,
in which method the bit string (25, 25a) is compressed using a compression method,
in which successive data words in which only the other bit value occurs are replaced with a respective first numerical value (W1a) which indicates the number of data words replaced,
wherein a respective second numerical value (W1a) indicates the number of subsequent first uncompressed data words (W2a, W3a),
wherein, in the compressed bit string (25a), a further first numerical value (W4a), which indicates the number of further replaced data words in which only the other bit value occurs, and a further second numerical value (W4a), which indicates the number of subsequent second uncompressed data words (W5a), follow the first uncompressed data words (W2a, W3a), and
wherein the compressed bit string (25a) starts with a first numerical value (W1a) and a second numerical value (W1a), and the first numerical value (W1a) is zero if the bit string (25) starts with a data word whose bit positions do not all have the other bit value.

2. Method according to Claim 1, **characterized in that** the bit string (25, 25a) contains more bit positions than are contained in a data word from a processor accessing the memory unit (16),
and **in that** the bit string (25, 25a) preferably contains several thousand, several hundred thousand or several million bit locations which have several thousand, several hundred thousand or several million associated data records (30 to 34).

3. Method according to Claim 1 or 2, **characterized in that** a processor (12) combines two bit strings (25, 25a, 72) according to a combinational logic operation, preferably according to the OR function or the AND function,
wherein bit positions (82) which are associated with the same data record are combined,
and wherein preferably as many bit positions as are present in a data word from the processor are handled simultaneously.

4. Method according to one of the preceding claims, **characterized in that** two bit strings are combined in a temporally parallel manner by at least two processors according to a combinational logic operation,
or **in that** one bit string is handled by at least two processors according to a logic operation, preferably according to the NOT operation.

5. Method according to one of the preceding claims, **characterized in that** the bit position (74) in the bit string (25, 25a) denotes the number of the associated data record (30 to 34), and **in that** this number is recorded in the data record (30 to 34) or **in that** this number can be used to calculate the memory address of the associated data record (30 to 34), preferably using a method that is standard for the data records.

6. Method according to one of the preceding claims, **characterized in that** the bit string (25, 25a) is stored in a plurality of memory areas (B1 to B3), preferably of the same size,
**in that** a reference sequence having references (P1 to Pn) to the memory areas (B1 to B3) stipulates the order in which the bit string (25, 25a) is stored in the memory areas (B1 to B3).

7. Method according to Claim 6, **characterized in that** the occupancy of the memory areas (B1 to B3) is monitored,
and **in that** measures for including a new memory area or for releasing a memory area also involve the occupancy of other memory areas being changed.

8. Method according to Claim 7, **characterized in that** the inclusion of a new memory area (B2a) for storing a portion of the bit string (25, 25a) involves a portion (II) of the bit string (25, 25a) being transferred from another memory area (B2) to the new memory area (B2a), preferably a portion (II) for which more than a third of the memory area (B2) is required,
and **in that** a reference (P2a) to the new memory area (B2a) is inserted in the reference sequence (P1 to Pn) or is appended to the reference sequence.

9. Method according to Claim 7, **characterized in that** a check is performed to determine whether less than a third of a memory area (B3) is occupied by that portion (IIa) of the bit string (25, 25a) which is stored in it,
and **in that** a check is performed to determine whether the memory area (B2, B4) entered in the reference sequence before and/or after this memory area (B3) provides sufficient space for the transfer of the portion (IIa) of the bit string (25, 25a),
and **in that**, if there is sufficient space, the portion (IIa) of the bit string (25, 25a) is transferred and the reference (P3) to the now free memory area (B3) is removed from the reference sequence.

10. Memory unit (16),
having memory cells which store, for a data value (102), a data item from a bit string (25, 25a) comprising a multiplicity of successive bits (74) which each have one of two bit values,
and having memory cells for storing a multiplicity of data records (30 to 34) which are each associated with a bit position (74) in the bit string (25, 25a) and contain a data field for storing the data item,
wherein one bit value in the bit string (25, 25a) records that the data record (30 to 34) associated with the bit position having this bit value contains the data value in the data field for storing the data item,
and wherein the other bit value in the bit string (25, 25a) records that the data record (30 to 34) associated with the bit position (74) having this bit value does not contain the data value in the data field for storing the data item,
wherein
the bit string (25, 25a) was compressed using a compression method,
in which successive data words in which only the other bit value occurs are replaced with a respective first numerical value (W1a) which indicates the number of data words replaced,
wherein a respective second numerical value (W1a) indicates the number of subsequent first uncompressed data words (W2a, W3a),
wherein, in the compressed bit string (25a), a further first numerical value (W4a), which indicates the number of further replaced data words in which only the other bit value occurs, and a further second numerical value (W4a), which indicates the number of subsequent second uncompressed data words (W5a), follow the first uncompressed data words (W2a, W3a), and
wherein the compressed bit string (25a) starts with a first numerical value (W1a) and a second numerical value (W1a), and the first numerical value (W1a) is zero if the bit string (25) starts with a data word whose bit positions do not all have the other bit value.

11. Memory unit according to Claim 10, **characterized in that** the memory unit (16) contains memory cells having data which are required for carrying out the method according to one of Claims 1 to 9.

12. Program having an instruction sequence which, when executed by a processor (12), prompts a method according to one of Claims 1 to 9 to be carried out.

## Revendications

1. Procédé d'accès à une unité de mémoire (16) comportant des cellules de mémoire dans lesquelles, pour une valeur de données (102), est stockée une donnée d'une chaîne binaire (25, 25a) constituée d'une pluralité de bits consécutifs (74) ayant respectivement l'une de deux valeurs binaires, et comportant des cellules de mémoire destinées à stocker une pluralité d'enregistrements de données (30 à 34) qui sont respectivement associés à une position binaire (74) de la chaîne binaire (25, 25a) et contiennent un champ de données destiné à stocker la donnée,
procédé dans lequel, pour une valeur de données (102) d'une donnée, la chaîne binaire (25, 25a) est stockée dans un module d'écriture de l'unité de mémoire (16) ou dans lequel au moins une partie de la chaîne binaire (25, 25a) est lue dans un module de lecture,
dans lequel il est signalé par ladite une valeur binaire dans la chaîne binaire (25, 25a) que l'enregistrement de données (30 à 34) associé à la position binaire ayant ladite valeur binaire contient la valeur binaire dans le champ de données destiné à stocker la donnée,
et dans lequel il est signalé par l'autre valeur binaire dans la chaîne binaire (25, 25a) que l'enregistrement de données (30 à 34) associé à la position binaire (74) ayant ladite valeur binaire ne contient pas la valeur de données dans le champ de données destiné à stocker la donnée,
procédé dans lequel la chaîne binaire (25, 25a) est comprimée par un procédé de compression, dans lequel des mots de données consécutifs dans lesquels seule l'autre valeur binaire apparaît sont remplacés par une première valeur numérique respective (W1a) qui indique le nombre des mots de données remplacés,
dans lequel une seconde valeur numérique respective (W1a) indique le nombre de premiers mots de données non comprimés suivants (W2a, W3a),
dans lequel, dans la chaîne binaire comprimée (25a), une autre première valeur numérique (W4a) qui indique le nombre d'autres mots de données remplacés dans lesquels seule l'autre valeur binaire apparaît, et une autre seconde valeur numérique (W4a) qui indique le nombre de seconds mots de données non comprimés consécutifs (W5a), suivent les premiers mots de données non comprimés (W2a, W3a), et
dans lequel la chaîne binaire comprimée (25a) commence par une première valeur numérique (W1a) et une seconde valeur numérique (W1a), et lorsque la chaîne binaire (25) commence par un mot de données dont les positions binaires ne présentent pas toutes l'autre valeur binaire, la première valeur numérique (W1a) est nulle.

2. Procédé selon la revendication 1, **caractérisé en ce que** la chaîne binaire (25, 25a) contient plus de positions binaires que celles qui sont contenues dans un mot de données d'un processeur accédant à l'unité de mémoire (16),
et **en ce que** la chaîne binaire (25, 25a) contient de préférence plusieurs milliers, plusieurs centaines de milliers ou plusieurs millions d'emplacements binaires auxquels sont associés plusieurs milliers, plusieurs centaines de milliers ou plusieurs millions d'enregistrements de données (30 à 34).

3. Procédé selon la revendication 1 ou 2, **caractérisé en ce qu'**un processeur (12) combine deux chaînes binaires (25, 25a, 72) conformément à une opération de combinaison logique, de préférence conformément à une fonction OU ou à la fonction ET, dans lequel des positions binaires (82) qui sont associées au même enregistrement de données sont combinées,
et dans lequel autant de positions binaires que celles qui sont présentes dans un mot de données du processeur sont de préférence simultanément traitées.

4. Procédé selon l'une quelconque des revendications précédentes, **caractérisé en ce que** deux chaînes binaires sont combinées en parallèle dans le temps par au moins deux processeurs conformément à une opération de combinaison logique,
ou **en ce qu'**une chaîne binaire est traitée par au moins deux processeurs conformément à une opération logique, de préférence conformément à une opération NON.

5. Procédé selon l'une quelconque des revendications précédentes, **caractérisé en ce que** le numéro de l'enregistrement de données associé (30 à 34) est désigné par la position binaire (74) dans la chaîne binaire (25, 25a), et **en ce que** ce numéro est signalé dans l'enregistrement de données (30 à 34) ou **en ce que** l'adresse mémoire de l'enregistrement de données associé (30 à 34) peut être calculée à partir de ce numéro de préférence conformément à un procédé unique pour l'enregistrement de données.

6. Procédé selon l'une quelconque des revendications précédentes, **caractérisé en ce que** la chaîne binaire (25, 25a) est stockée dans plusieurs zones de mémoire (B1 à B3) ayant de préférence la même taille,
**en ce qu'**une chaîne de référence faisant référence (P1 à Pn) aux zones de mémoire (B1 à B3) fixe la séquence dans laquelle la chaîne binaire (25, 25a) est stockée dans les zones de mémoire (B1 à B3).

7. Procédé selon la revendication 6, **caractérisé en ce que** l'occupation des zones de mémoire (B1 à B3) est surveillée,
et **en ce que** l'occupation d'autres zones de mémoire est également modifiée lors de mesures destinées à inclure une nouvelle zone de mémoire ou à libérer une zone de mémoire.

8. Procédé selon la revendication 7, **caractérisé en ce que**, lors de l'inclusion d'une nouvelle zone de mémoire (B2a) destinée à stocker une partie de la chaîne binaire (25, 25a), une partie (II) de la chaîne binaire (25, 25a) est recopiée depuis une autre zone de mémoire (B2) dans la nouvelle zone de mémoire (B2a), de préférence une partie (II) pour laquelle plus d'un tiers de la zone de mémoire (B2) est nécessaire,
et **en ce qu'**une référence (P2a) à la nouvelle zone de mémoire (B2a) est introduite dans la chaîne binaire (P1 à Pn) ou est annexée à la chaîne de référence.

9. Procédé selon la revendication 7, **caractérisé en ce qu'**il est vérifié si une zone de mémoire (B3) est occupée à moins d'un tiers par la partie (IIa) stockée dans celle-ci de la chaîne binaire (25, 25a),
et **en ce qu'**il est vérifié si la zone de mémoire (B2, B4) indiquée dans la chaîne de référence avant et/ou après ladite zone de mémoire (B3) offre suffisamment de place pour la recopie de la partie (IIa) de la chaîne binaire (25, 25a),
et **en ce que**, lorsque la place est suffisante, la partie (IIa) de la chaîne binaire (25, 25a) est recopiée et la référence (P3) à la zone de mémoire maintenant libre (B3) est retirée de la chaîne de référence.

10. Unité de mémoire (16) comportant des cellules de mémoire dans lesquelles, pour une valeur de données (102), est stockée une donnée d'une chaîne binaire (25, 25a) constituée d'une pluralité de bits consécutifs (74) ayant respectivement l'une de deux valeurs binaires,
et comportant des cellules de mémoire destinées à stocker une pluralité d'enregistrements de données (30 à 34) qui sont respectivement associés à une position binaire (74) de la chaîne binaire (25, 25a) et contiennent un champ de données destiné à stocker la donnée,
dans lequel il est signalé par ladite une valeur binaire dans la chaîne binaire (25, 25a) que l'enregistrement de données (30 à 34) associé à la position binaire ayant ladite valeur binaire contient la valeur de données dans le champ de données destiné à stocker la donnée,
et dans lequel il est signalé par l'autre valeur binaire de la chaîne binaire (25, 25a) que l'enregistrement de données (30 à 34) associé à la position binaire (74) ayant ladite valeur binaire ne contient pas la valeur de données dans le champ de données destiné à stocker la donnée,
dans lequel la chaîne binaire (25, 25a) a été comprimée par un procédé de compression, dans lequel des mots de données consécutifs dans lesquels seule l'autre valeur binaire apparaît sont remplacés par une première valeur numérique respective (W1a) qui indique le nombre des mots de données remplacés,
dans lequel une seconde valeur numérique respective (W1a) indique le nombre de premiers mots de données non comprimés suivants (W2a, W3a),
dans lequel, dans la chaîne binaire comprimée (25a), une autre première valeur numérique (W4a) qui indique le nombre d'autres mots de données remplacés dans lesquels seule l'autre valeur binaire apparaît, et une autre seconde valeur numérique (W4a) qui indique le nombre de seconds mots de données non comprimés consécutifs (W5a), suivent les premiers mots de données non comprimés (W2a, W3a), et
dans lequel la chaîne binaire comprimée (25a) commence par une première valeur numérique (W1a) et une seconde valeur numérique (W1a), et lorsque la chaîne binaire (25) commence par un mot de données dont les positions binaires ne présentent pas toutes l'autre valeur binaire, la première valeur numérique (W1a) est nulle.

11. Unité de mémoire selon la revendication 10, **caractérisée en ce que** l'unité de mémoire (16) contient des cellules de mémoire comportant des données qui sont nécessaires pour la mise en oeuvre du procédé selon l'une quelconque des revendications 1 à 9.

12. Programme comportant une chaîne d'instructions lors de l'exécution desquelles un processeur (12) met en oeuvre un procédé selon l'une quelconque des revendications 1 à 9.
